# EUROPEAN PATENT APPLICATION

(11) **EP 2 138 941 A1**
(43) Date of publication of application: **30.12.2009**
(21) Application number: 08305296.9
(22) Date of filing: 23.06.2008
(51) Int. Cl.: G06F 17/30

(54) **System and method for providing metadata**

(71) Applicant: Alcatel Lucent, 75008 Paris (FR)
(72) Inventor: Hemmeryckx-Deleersnijder, Bart Karel, 9090, Melle (BE); De Mondt, Hans, 2960, Brecht (BE); Verde, Orlando, 2018, Antwerpen (BE); Pelt, Michiel, 1853, Grimbergen (BE)
(74) Representative: D'Halleweyn, Nele Veerle Trees Gertrudis

(57) **Abstract**

A system and corresponding devices are disclosed for automatically providing a user with metadata related to data provided by the user, the data representing media content, comprising:
a. a context storage means (1) adapted for storing context data relating to and for each of a predetermined set of events;
b. an annotation storage means (2) adapted for storing annotation data for each of the set of events;
c. an uploading module (3) for uploading the data from a user into the system;
d. an association means (4) for associating a predetermined event and context to the data.

Also a corresponding method for automatically providing a user with annotation data related to data provided by the user is disclosed.

## Description

### Technical field of the invention

The present invention relates to the field of systems and methods for automatically providing a user with metadata related to data provided by the user, the data representing media content.

### Background of the invention

Metadata annotation both manually as automatically has been studied.

The on-line service www.Flickr.com provides an example of metadata annotation where manual metadata can be added to photographs. Other examples exist for other media like videos text etc.

An example for automatic metadata annotation can be retrieved in US patent 7068309, in which a system and method are disclosed for providing a peer-to-peer photo-sharing environment. The system includes: manual and automatic photo annotation at the client; periodic client-server synchronization; an index of client photos on a central server or a photo database that is resident on the central server, which is updated by the client-server synchronization function; end-user search functionality to search the centralized index or photo database; and transmission of the relevant photos to the client via an on-line image cache. In one embodiment, one client's new photos are automatically displayed on another client's computer (e.g., via screen saver or another mechanism).

Another example of Metadata annotation is described in the paper titled "Image annotation with Photocopain", Tuffield et al., Proceedings First International Workshop on Semantic Web Annotations for Multimedia (SWAMM 2006), Edinburgh, Scotland, where systems are described which provide semi automatic metadata (data about data) annotation by combining the context where a photograph was captured with information from readily available data sources.

The above mentioned prior art solutions are solutions for automatic, semi automatic or manual meta data annotation. Many systems are described or used likewise. The intention of these solutions is to annotate as much as possible metadata on the multimedia. This way they create an abundance of metadata information towards the multimedia item, but there is no notion of value rating of the meta data information. This can make (the stack of) associated metadata unmanageable, unreadable, and only algorithmically usable (for instance usable for searching purposes).

### Summary of the invention

The term "comprising", should be interpreted as such that it does not exclude other elements or steps.

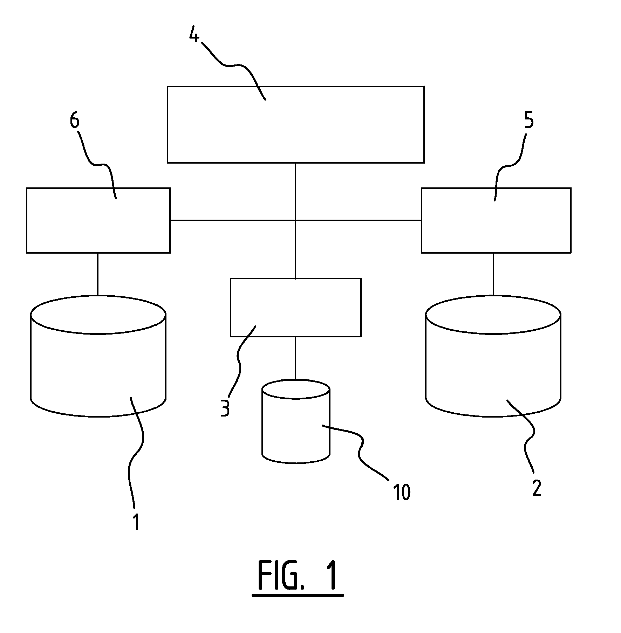

According to a first aspect of the present invention (illustrated in Fig. 1), a system is disclosed for automatically providing a user with metadata related to data provided by the user, the data representing media content, comprising :
- a context storage means (1) adapted for storing context data relating to and for each of a predetermined set of events;
- an annotation storage means (2) adapted for storing annotation data for each of the set of events;
- an uploading module (3) for uploading the data from a user into the system;
- an association means (4) for associating a predetermined event and context to the data.

The metadata provided by the system can comprise annotation data.

The context data which is stored in the context storage means (1), for a certain event (e.g. a music concert), can comprise for instance a time schedule of the event. The time schedule may further be linked with specific subevents of the event (e.g. the playing of a particular song at the concert). Different events may be comprised in the context storage means (1). The context data can be seen as stored as a list, hierarchical or ontological tree, a framework which defines the backbone of the event, and which can serve as a guideline for annotation providers. The context data may further comprise data specifying the annotation provider or set of annotation providers.

The annotation storage means (2) can be provided with annotation data by annotation providers for each of the events listed in the context storage means.

The uploading module (3) can be adapted for uploading data from the user, as for instance media data, as for instance pictures, video, etc. to the system.
The uploading module (3) may further interact with an authentication module (not depicted) or may perform an authentication action for the user.

The association means for associating a predetermined event and context data to the uploaded data may be an automatic association means, which associates events and contexts based on native meta data existing in the data uploaded by the user. The association of a predetermined event and context to the uploaded data by means of the association means may also be based on interaction with a user by means of a user interface as for instance a graphical user interface, by which the user may define or may associate the data with the predetermined event and context (e.g. by defining time of a picture and requested annotation provider ).

The system according to embodiments of the present invention, may further comprise an outputting means for outputting annotation data to a media outputting device, the annotation data being linked with the data, based on the associated event and context. The outputting means can for instance be a means which is adapted for exporting the annotation data to a display or speaker or multimedia enabled computing device.

The system according to embodiments of the present invention, may further comprise an annotation means (5) for adding annotation data for each of the set of events, subevents or contexts, to the annotations storage means. The annotation means may further comprise an authentication means or an authentication module or may interact with an authentication means or an authentication module in order to authenticate predetermined sets of annotation providers to add annotations in the annotation storage means. Different predetermined (sets of) annotation providers may have different access rights to for instance certain subevents or context of the event, and thus to the filling in of the annotation storage means (2).

According to embodiments of the present invention the means for associating a predetermined event and/or context to the data is adapted for extracting native meta data from the data and adapted for automatically associating a context and an event to the data. The means for associating a predetermined event and/or context to the data can for instance automatically recognise native meta data within the data provided by the user, and can from there automatically associate a corresponding event or context. Alternatively, the means for associating a predetermined event and/or context to the data may be adapted for extracting meta data from the data by for instance image recognition or optical character recognition. The means for associating a predetermined event and/or context to the data (4) can be adapted for interacting with the user by means of a user machine interface. The means for associating a predetermined event and/or context to the data (4) can be adapted for allowing the combination of automatic and manual event and context definition; for instance time information from an uploaded photograph may be extracted automatically, while the requested annotator for the photograph can be requested/filled in from/by a user via a user interface.

According to preferred embodiments of the present invention the means for associating a predetermined event and/or context to the data is adapted for extracting time and/or location information from the data and the annotation data comprises time information data. Systems according to these embodiments are able to link data which have a corresponding time and/or location information.

According to embodiments of the present invention the system may further comprise a module adapted for authenticating and allowing predetermined sets of event and/or context providers to add events and/or contexts respectively to the context storage means (1). This module can also be called event context description module (6), which allows predetermined sets of event and/or context providers to manage/maintain/update the event context storage means (1).

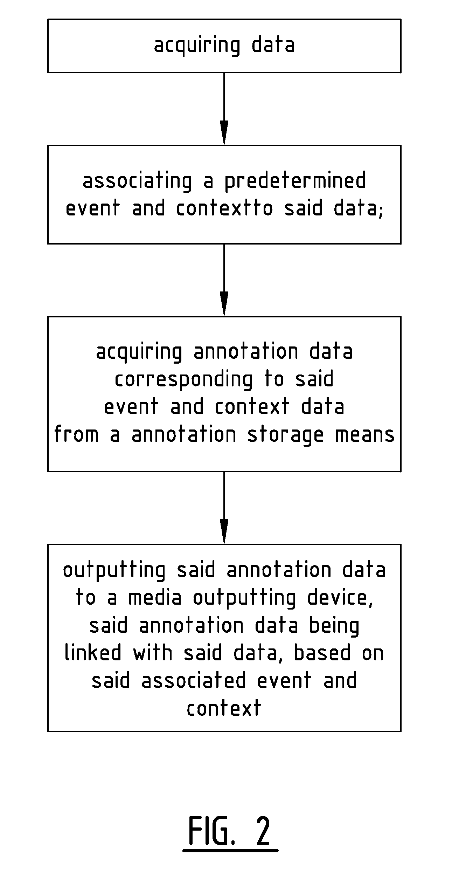

According to a second aspect of the present invention, a method is disclosed for automatically providing a user with annotation data related to data provided by the user (illustrated in Fig. 2), the data representing media content, comprising :
- acquiring data;
- associating a predetermined event and context to the data;
- acquiring annotation data corresponding to the event and context data from a annotation storage means;
- outputting the annotation data to a media outputting device , the annotation data being linked with the data, based on the associated event and context.

According to preferred embodiments of the present invention, associating a predetermined event and/or context to the data comprises extracting meta data from the data and automatically associating a context and an event to the data based on a predetermined set of rules. The predetermined set of rules may be set by the service provider and may be based on a user profile. It may be manageable by the user.

According to embodiments of the present invention, associating a predetermined event and/or context to the data comprises interacting with the user by means of a user-machine interface in order to acquire such information from the user. This interface may for instance be a graphical user interface.

According to embodiments of the present invention, associating a predetermined event and/or context to the data comprises acquiring time and/or location information for the data.

According to embodiments of the present invention, acquiring annotation data corresponding to the event and the context data from annotation storage means comprising retrieving annotation data from the annotation storage means for which time and/or location information corresponds with the time and/or location information for the data.

According to a third aspect of the present invention, a storage device is disclosed adapted for storing context data for at least one event, said context data being stored in the form of a list, hierarchical or ontological tree.

According to preferred embodiments the list, hierarchical or ontological tree comprises a time schedule of said event.

According to preferred embodiments, entries in the list, hierarchical or ontological tree comprise information identifying or relating to predetermined annotation providers.

According to preferred embodiments, the storage means further comprises annotation data for at least one event from at least one predetermined annotation provider, corresponding with entries in the list, hierarchical or ontological tree.

According to a fourth aspect of the present invention, an event annotation module is provided adapted for authenticating and allowing predetermined annotation providers to provide annotation information to a storage device of the third aspect.

According to a fifth aspect of the present invention, an event context description module is provided adapted for authenticating and allowing predetermined event and/or context providers to provide event and/or context information to a storage device of the third aspect or fourth aspect.

Features and embodiments for the second, third, fourth and fifth aspect of the present invention, corresponding to features and embodiments of the first aspect of the present invention, are similarly considered to be within the scope of the present invention, as will be recognised by the skilled person.

### Brief description of the drawings

The accompanying drawings are used to illustrate embodiments of the present invention.
Fig. 1 illustrates a system according to embodiments of the present invention.
Fig. 2 is a flowchart illustrating methods according to embodiments of the present invention.
Fig. 3 illustrates a possible system architecture according to embodiments of the present invention.

Reference signs are chosen such that they are the same for similar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

Aspects of the present invention are based on the concept that metadata annotated (manual, semi automatic or automatic) by known or personally/group linked valued sources increases the perceived value of media.

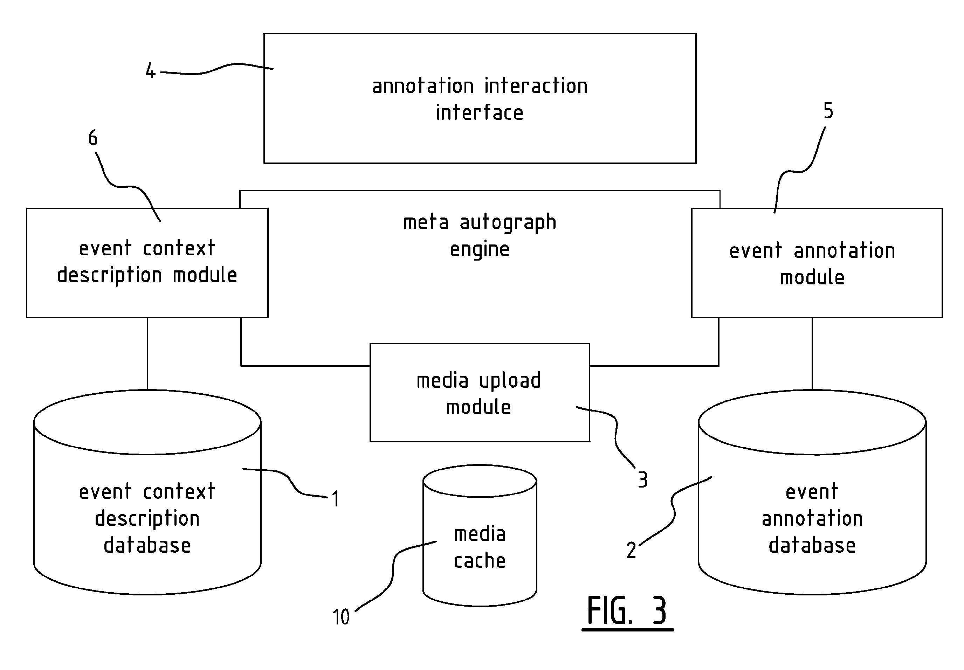

The system can use an authentication module (based on state of the art), that authenticates the logged-in user or service and which is linked to for instance a User Profile Server (a user profile managing or storing means). After a user has been authenticated by the system, the user can have access to the Meta Graph Engine (see Fig. 3), which can link/annotate metadata to user uploaded or user referenced media, possible according to the user's profile and/or preferences. This linking or annotation can be performed by using state of the art linking systems or annotation notations or dialects (for instance XML database notations, EXIFF standards etc.).

The system according to embodiments of the present invention (also called Meta AutoGraph Engine (see Fig. 3)) can support at least three functionalities:
- It comprises data relating to "event context description" (see Fig. 3) in an "Event Content Description database" (1). This "event context description database" (1) comprises a list (or any other structure being ontologies, hierarchies etc.) of entries (described in for instance XML like notation or stored as a list or in a database), that lists the different stages of an event. This can be based on time indexing or any other indexing system available during an event. For example, the context event description of a live concert can be time indexed. It can for instance for each time entry state the start of a song in the play list of the concert. It can hold the song tile, performers, scenery info, weather information etc. The header, title or descriptor of this context event could in this case comprise the name of the event and/or the date etc. The "event context description" database (1) can be managed, maintained or updated by means of an "event context description module" (6).
- It comprises a "event annotation module" (5) (see Fig. 3), this module can allow authenticated users to annotate the various entries in the "event context description" list, which can be stored in the event annotation database (2). The event context description database (1) and event annotation database (2) may be the same or different and may be located on the same or different hardware.

For example, a famous artist can log in to the system, being authenticated, and annotate the play list he (just) performed on an event/concert.
- It comprises a "media upload module" (3) (see Fig. 3), where (registered) users can upload their media to be annotated.

Using the Annotation Interaction Interface (4) (see Fig. 3), (preferably authenticated) users can link their uploaded media towards a certain event listed (and described in the header/title) in the "event context description" database (1).

Afterwards, users can instruct the system (Meta AutoGraph Engine) to annotate their uploaded media with the entered annotations (entered through the "event annotation module" (5)), the annotations being metadata for the uploaded data. The connected user could choose for what value (what type of annotations) he wants to have his data annotated, where this value could be expressed as for instance: owner of the venue, name of the performer, (set of) friends (a User Profile stored somewhere in the system or retrievable by the system may comprise a Community Handler module, adapted for getting meta data from friends, interest groups or people he is related to), family, fan site services (e.g. the website of performer X could have a service (web service etc.) that links song names to other quotes). This annotation can be provided automatically, preferably based on time; uploaded media typically comprises meta data related to time information and the event context description can be based on/comprise time information.

Subscription and time synchronization can be achieved via visual data encoded systems by example. When a user visits an event as for instance a concert with this media capturing device, the time on his media capturing device (photo camera e.g.) is not necessarily synchronized with the time presented by the event organizer or with other parties (e.g. annotators). To synchronize this time the user can take a capture of a clock or any other date encoded object, such that time of the camera can be linked to time of the event context description (database). Hereby time synchronization can thus be performed between the data to be annotated and the annotations from annotation providers.

Generally, any of the functions described herein can be implemented using software, firmware (e.g., fixed logic circuitry), hardware, manual processing, or a combination of these implementations. The terms "module," "component", "functionality," and "logic" as used herein generally represent software, firmware, hardware, or any combination thereof. In the case of a software implementation, the module, component, functionality, or logic represents program code that performs specified tasks when executed on processor(s) (e.g., any of microprocessors, controllers, and the like). The program code can be stored in one or more computer readable memory devices. Further, the methods and systems described herein are platform-independent such that the techniques may be implemented on a variety of commercial computing platforms having a variety of processors.

Methods in accordance with the present invention may also be described in the general context of computer executable instructions. Generally, computer executable instructions can include routines, programs, objects, components, data structures, procedures, modules, functions, and the like that perform particular functions or implement particular abstract data types. The methods described herein may also be practiced in a distributed computing environment where functions are performed by remote processing devices that are linked through a communications network. In a distributed computing environment, computer executable instructions may be located in both local and remote computer storage media, including memory storage devices.

While some embodiments described herein include some but not other features included in other embodiments, combinations of features of different embodiments are meant to be within the scope of the invention, and form different embodiments, as would be understood by the skilled person.

While the principles of the invention have been set out above in connection with specific embodiments, it is to be clearly understood that this description is merely made by way of example and not as a limitation of the scope of protection which is determined by the appended claims.

## Claims

1. A system for automatically providing a user with metadata related to data provided by said user, said data representing media content, comprising :
a. a context storage means (1) adapted for storing context data relating to and for each of a predetermined set of events;
b. an annotation storage means (2) adapted for storing annotation data for each of said set of events;
c. an uploading module (3) for uploading said data from a user into said system;
d. an association means (4)for associating a predetermined event and context to said data.

2. A system according to claim 1, further comprising an outputting means for outputting annotation data to a media outputting device, said annotation data being linked with said data, based on said associated event and context.

3. A system according to claim 1 or 2, further comprising an annotation means (5) for adding annotation data for each of said set of events to said annotations storage means.

4. A system according to claim 3, wherein said annotation means (5) is adapted for authenticating and allowing predetermined sets of annotation providers to add annotations into said storage means.

5. A system according to claim 4, wherein said annotation means (5) is adapted for authenticating and allowing predetermined sets of annotation providers to add annotations into said annotation storage means (2) for a predetermined context of said events.

6. A system according to claim 1, wherein said means for associating a predetermined event and/or context to said data is adapted for extracting native metadata from said data and adapted for automatically associating a context and/or an event to said data.

7. A system according to claim 1 to 3, further comprising a module adapted for authenticating and allowing predetermined sets of event and/or context providers to add events and/or contexts respectively (6) to said context storage means (1).

8. A method for automatically providing a user with annotation data related to data provided by said user, said data representing media content, comprising :
a. acquiring data
b. associating a predetermined event and context to said data;
c. acquiring annotation data corresponding to said event and context data from a annotation storage means;
d. outputting said annotation data to a media outputting device , said annotation data being linked with said data, based on said associated event and context.

9. A method according to claim 8, wherein associating a predetermined event and/or context to said data comprises extracting metadata from said data and automatically associating a context and an event to said data based on a predetermined set of rules.

10. A method according to claim 8 to 9, wherein acquiring annotation data corresponding to said event and context data from a annotation storage means comprises retrieving annotation data from said annotation storage means for which time and/or location information corresponds with said time and/or location information for said data.

11. A storage device adapted for storing context data for at least one event, said context data being stored in the form of a list, hierarchical or ontological tree.

12. A storage device according to claim 11, wherein said list, hierarchical or ontological tree comprises a time schedule of said event.

13. A storage device according to claim 11, wherein entries in said list, hierarchical or ontological tree comprise information identifying predetermined annotation providers.

14. A storage device according to any of claims 11 to 13, further comprising annotation data for at least one event from at least one predetermined annotation provider, corresponding with entries in said list, hierarchical or ontological tree.

15. An event annotation module adapted for authenticating and allowing predetermined annotation providers to provide annotation information to the storage device of claim 11 to 14.
